# EUROPEAN PATENT APPLICATION

(11) **EP 4 122 318 A1**
(43) Date of publication of application: **25.01.2023**
(21) Application number: 21306025.4
(22) Date of filing: 21.07.2021
(51) Int. Cl.: A01K 11/00

(54) **ONE-PIECE TAG FOR IDENTIFYING AN ANIMAL**

(71) Applicant: Allflex Europe SAS, 35500 Vitré (FR)
(72) Inventor: SALIOU, Pierre, 35700 Rennes (FR); DECALUWE, Johan, 53000 Laval (FR)
(74) Representative: Vidon Brevets & Stratégie

(57) **Abstract**

The invention concerns a one-piece tag (1) for identifying an animal comprising:
- a head body (31), comprising a first straight channel starting from a back end of said head body (31) and adapted to receive an applicator pin (9), and
- a head insert (4), located at a front end of said head body (31),
said head insert (4) comprising a pin end portion presenting an elliptic conical shape, adapted to pierce a portion of an animal's body.

## Description

### 1. Field of the disclosure

The field of the disclosure relates to tags for marking animals.

More particularly, the invention relates to an animal one-piece tag permitting the identification of an animal.

### 2. Background

For many years, the marking of livestock animals, such as cattle, pigs or sheep, has become mandatory in many parts throughout the world, to ensure the sanitary monitoring of this livestock and also to guarantee the origin and quality of the meat offered to consumers. In addition to mandatory marking, there are also many voluntary systems of marking or tracking animals for similar or the same reasons.

Identification tags for animal, for example for attachment to the animal's ear, are now available. These identification tags may comprise an identification number inscribed on a portion of them that is attached to the ear, which makes it possible to track the animal throughout its existence.

Identification tags may be formed on two pieces, a male part and a female part, or may be formed as a one-piece tag.

One-piece tags may comprise a main body with a portion adapted to receive the identification number inscribed on it, and a head part extending from one end of said main body. For example, the head part may be formed with a pin end adapted to pierce the ear of an animal in such a way that it does not injure the animal and does not block the healing of the animal's ear after installation of this ear tag.

to achieve this, the pin end of a tag may be provided with a circular end shape adapted to pierce the ear of an animal.

However, with certain one-piece tags, the force needed to apply the tag on the animal's ear may be excessive. As such, this force needs to be minimized for health and safety of both a user applying the tag (such as a farmer) and the animal. For example, if excessive force is needed, this may increase the risk of user injury to a person who is attaching the tag to an animal. This can be especially true if a user has to install many tags on a large number of animals, perhaps also under time pressure. An excessive application force for the tag also increase the risk of injury for the animal. For example, if excessive force is required to attach the tag, this can lead to tearing of the animal's skin, injury to the animal, subsequent infection, and/or reduced healing after tag application,

Moreover, certain known tags are classically able to cooperate with an applicator pin. The loading of the tag on the applicator pin may be done by the bottom of the head part, through the main body, and this type of application requires a rotation of the head part to fully load the tag on the applicator pin in order to place the applicator pin in a position of use.

A disadvantage of such a configuration is that the setting up of the applicator pin in a position of use requires a lot of manipulations by the user. This wastes time and also increase the risk of injury for the user.

There is therefore need for a novel technique for marking an animal with a tag that does not have all these prior-art drawbacks.

### 3. Summary

The disclosure proposes a novel solution that does not have all these drawbacks of the prior art, in the form of, in at least one embodiment, a one-piece tag for identifying an animal comprising:
- a head body, comprising a first straight channel starting from a back end of said head body and adapted to receive an applicator pin, and
- a head insert, located at a front end of said head body,
said head insert comprising a pin end portion presenting an elliptic conical shape, adapted to pierce a portion of an animal's body.

The use of a pin end portion presenting an elliptic conical shape, i.e. having an apex at a front end, and an elliptic section at a rear end, enables to reduce the force needed to pierce a portion of an animal's body (for example its ear or its wing) to fix the tag.

It can also facilitate the healing, as the hole made by the head insert is smaller than that of the prior art head insert.

It can also reduce the risk that the head insert and head body goes back through the hole made by the head insert.

It can also smooth the contact and potentially improve the comfort of the animal, and the retention rate of the tag on the animal.

According to at least one embodiment, the apex of the pin end portion and the first straight channel are located on a same axis.

In this way, the first straight channel and the apex of the pin end portion are aligned, and the applicator pin can be guided within the first straight channel and transfer its force to the pin end portion, thus improving the piercing of the animal's body.

According to at least one embodiment, the pin end portion comprises a first part, comprising an apex at its front end and an elliptic section at its rear end.

For example, the first part comprises:
- a first surface inclination angle from apex relative to a plane of symmetry defined by the apex of the pin end portion and the major axis of an elliptic section of the pin end portion, and
- a second surface inclination angle from apex relative to a plane orthogonal to the plane of symmetry P. (i.e. relative to the plane defined by the apex of the pin end portion and the minor axis of the elliptic section of the pin end portion).

In this embodiment, the first surface inclination angle is different from the second surface inclination angle. The first part thus has an apex at its front end, and an elliptic section at its rear end.

In another embodiment, the pin end portion comprises a first part, comprising an apex at its front end and a disk section at its rear end, and a second part comprising the disk section at its front end and an elliptic section at its rear end.

In this case, the first surface inclination angle is identical to the second surface inclination angle.

For example, the second part comprises:
- the second surface inclination angle from apex relative to the plane orthogonal to the plane of symmetry,
- a third surface inclination angle from a point located at a junction between the first part and the second part relative to the plane of symmetry.

In this case, the second surface inclination angle being different from the third surface inclination angle. The second part thus has a disk section at its front end, i.e. at the junction with the first part, and an elliptic section at its rear end.

For example, the second surface inclination angle is comprised between 17 and 27 degrees, preferably approximately equal to 22.5 degrees.

In embodiments where the pin end comprises only a first part, the first surface inclination angle can be comprised between 7 and 17 degrees, preferably approximately equal to 11.5 degrees.

In embodiments where the pin end comprises both a first part and a second part, the first surface inclination angle can be equal to the second surface inclination angle, and the third surface inclination angle can be comprised between 7 and 17 degrees, preferably approximately equal to 11.5 degrees.

According to at least one embodiment, said first part and/or said second part presents a surface with rounded edges.

The use of rounded edges, instead of sharp edges, enables to reduce the risk to hurt the animal or a user.

In addition, the use of rounded edges, instead of sharp edges, enables to reduce the risk of the hole widening during lifetime of the animal.

According to at least one embodiment, the head body comprises a second channel, starting from the front end of said head body, and wherein said head insert comprises a support portion inserted into said second channel.

The head body and the head insert can thus be made of different materials, for example a harder one for the head insert.

For example, the head insert comprises at least one fin, for example two fins, formed on an external surface of said support portion, each of said fins being clipped into a corresponding recess formed onto said head body.

In this way, the head insert is firmly fixed to the head body.

According to at least one embodiment, the head insert comprises a third channel in the continuity of said first channel, when said support portion is inserted in said second channel.

In this way, the applicator pin can be inserted within the head insert, through the first channel and third channel, to improve the force applied on the apex to pierce the animal's body.

According to at least one embodiment, the tag comprises a main body extending in a longitudinal plan and a head support connecting the head body to the main body, and wherein the head body extends in a direction parallel to said longitudinal plan.

### 4. List of figures

Other features and advantages of the disclosure shall appear more clearly from the following description of particular embodiments, given by way of a simple illustratory and non-exhaustive examples and from the appended figures, of which:
- Figure 1 illustrates a perspective view of a tag for identifying an animal according to one embodiment of the disclosure;
- Figure 2 illustrates a lateral view of a head part with a head insert according to one embodiment of the disclosure;
- Figure 3 illustrates a front view of a head part with a head insert of a tag according to the embodiment of figure 1;
- Figure 4 illustrates a rear view of a head part with a head insert of a tag according to the embodiment of figure 1;
- Figure 5 illustrates a rear cross-section view of a head part with a head insert of a tag according to the embodiment of figure 1;
- Figure 6 illustrates a top cross-section view of a head part with a head insert of a tag according to the embodiment of figure 1;
- Figures 7A and 7B illustrate a side view and a top view of a head insert according to a first embodiment of the disclosure, Figure 7C illustrates a lateral cross-section view of a head part of a tag with such head insert;
- Figures 8A, 8B and 8D illustrate a side view, a top view and a perspective view of a head insert according to a second embodiment of the disclosure, Figure 8C illustrates a lateral cross-section view of a head part of a tag with such head insert;
- Figure 9 illustrates a perspective top view of a tag for identifying an animal according to a second embodiment of the disclosure, and
- Figure 10 illustrates a perspective bottom view of a tag for identifying an animal according to another embodiment of the disclosure.

### 5. Detailed description of embodiments of the disclosure

The general principles of the disclosure include the use of a one-piece tag combined with the use of a head insert comprising a pin end portion presenting an elliptic conical shape.

In at least one embodiment, such shape of the pin end portion lowers the risk of injuries for the user and for the animal. The force needed to apply tags with the shapes and designs described herein on an animal is significantly reduced in comparison with head inserts of the prior art. For example, with such a shape, the force needed to pierce an ear of an animal can be reduced by a half. Moreover, this reduction in force will improve the retention rate of the tag and improve any healing of the animal's wound caused by the tag application. The wound healing and retention rate are improved, at least in part, because the hole in the animal's ear (or other body part the tag is attached to) is smaller, cleaner, includes less tearing, and/or includes less infection due the design and shape of the tags described herein.

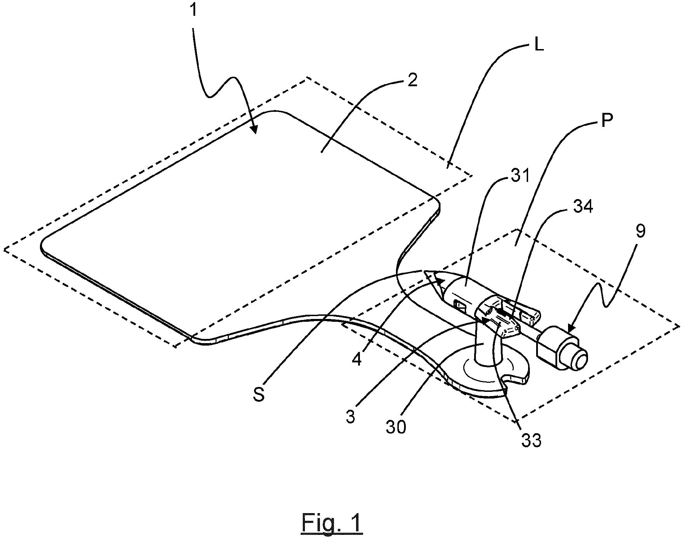

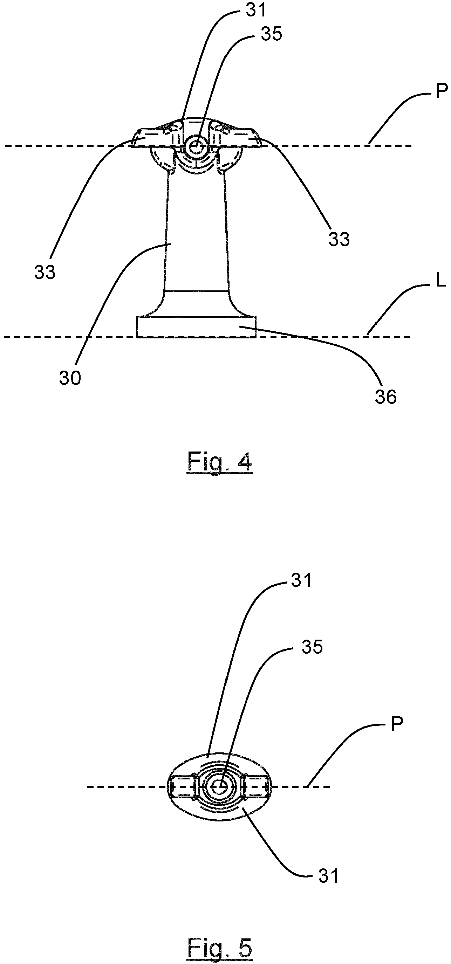

Below, different embodiments of the disclosure are described with the help of figures 1 to 10.

More specifically, figures 1 to 8D illustrate a tag 1 for identifying an animal comprising:
- a main body 2,
- a head part 3 comprising a head support 30 and a head body 31, and
- a head insert 4.

The main body 2 extends in a longitudinal plane L and presents for example a rectangular part, which may be adapted for receiving the inscription of an identification indicia (such as a number, color, etc.) of an animal. In another embodiment, not illustrated, the main body can have the shape of a disc. More generally, the main body can have any shape that ensures that the tag remains on the animal after being placed. The main body may optionally include means for electronic identification and/or monitoring of the animal.

In the continuity of this rectangular part illustrated in Figure 1, the main body 2 comprises a neck portion forming an end portion of this main body.
As illustrated in this figure 1, the head part 3 extends from one end of the main body 2, which corresponds here to the end of the neck portion.

This head part 3 comprises:
- a head support 30 connecting the head part 3 to the main body 2, and
- a head body 31 extending in a direction parallel to the longitudinal plane L.

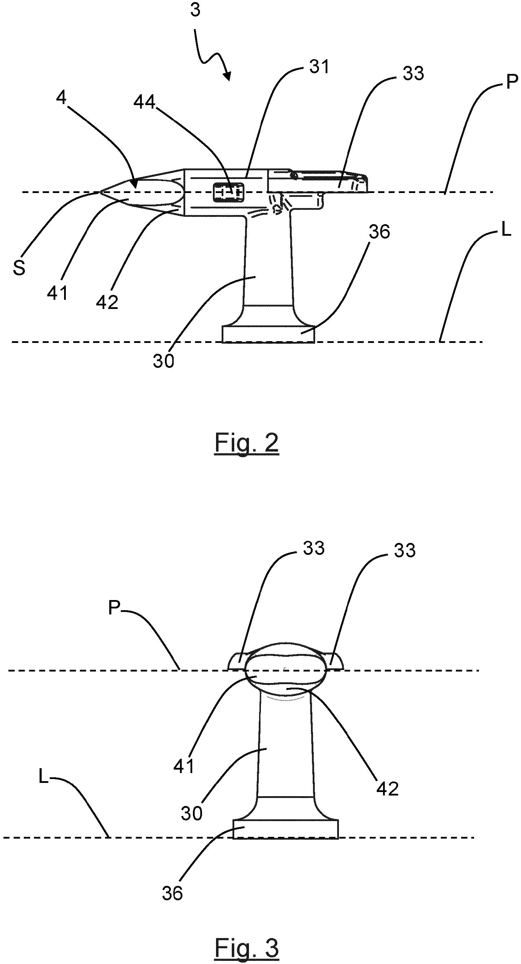

The head support 30, which may also be referred to as a stem, can be connected to the main body 2 by the way of a connection part 36, as visible for example in figures 2 and 3. For example, this connection part 36 takes the form of a base presenting a larger diameter than a diameter of the head support in order to reinforce the maintaining of the head part 3 on the main body 2.

This head support 30 is, in this embodiment, arranged according to a direction approximately orthogonal to the longitudinal plane L.

In this embodiment, the head support 30 could measure between 10 and 20 mm, for example about 13.45mm.

In other embodiments, the size of the head support can be different, depending for example on the thickness of the ear, or on the type of animal on which is has to be applied.

As to the head body 31, it comprises:
- a first straight channel 35, starting from a back/rear end of the head body 31, and adapted to receive an applicator pin 9, and
- a second channel 38, starting from a front end of the head body 31 and adapted to receive at least one portion of the head insert 4.

More particularly, the first straight channel 35 is formed at a first end of the head body 31 corresponding to the back/rear of this head body. The first channel 35 is preferably straight and aligns with the direction of the head body, as it can receive the applicator pin.

More precisely, in this embodiment, the first straight channel 35 is located in continuity with a passage 34 formed by wings 33 located at the back/rear end of the head body 31 and implemented for guiding the applicator pin 9 when inserted into the first channel.

There are, for example, two wings 33 that form an anchor "V" shaped on the back side of the head body in certain embodiments.

The second channel 38, is formed at a front end of the head body 31 corresponding to the front of this head body.

It is to be noticed that the first and second channels may be straight and aligned (or alternatively, approximately aligned) according to a direction corresponding to the direction of the head body. Thus, the first and second channels may be aligned according to a direction parallel (or alternatively, approximately parallel) to the longitudinal plane L.

Such a direction of the first channel 35 parallel (or approximately parallel) to the longitudinal plane L of the main body allows a loading of the applicator pin 9 by the back of the tag 1, i.e. by the back end of the head body 31, for example between the two wings 33.

In this embodiment, the head body 31, without the wings 33, measures for example between 17 and 27 mm, and for instance about 21.8mm. In another embodiment where the head body 31 cooperates with wings 33, the head body 31 with the wings 33 measures for example between 17 and 27 mm, and for instance about 21.8mm.

In other embodiments, head body could measure between 15 and 30 mm. The size of the head body can, for example, depend on the course and/or the length of the pin of the tag applicator. It can also depends on the animal on which is has to be applied and/or under which circumstances it is applied.

Moreover, in an embodiment, the head body presents an elliptical shape, with an elliptic section. In another embodiment, the head body presents a cylindrical or frustoconical shape, with a disc-shaped section. With any of these shapes, the head more easily penetrates into and through a part of the animal (for example its ear or its wing) with less force or effort needed for application. It also allows a clean piercing and thus fast healing.

As already described, the tag 1 can also include a head insert 4.

The head insert 4 comprises a support portion 43 adapted to be inserted in the second channel 38.

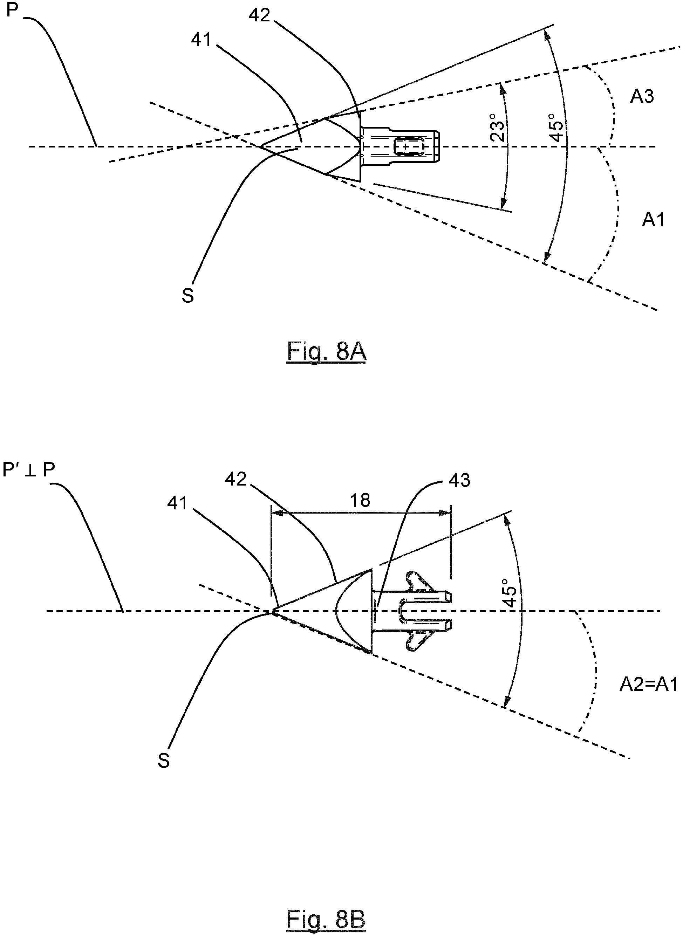

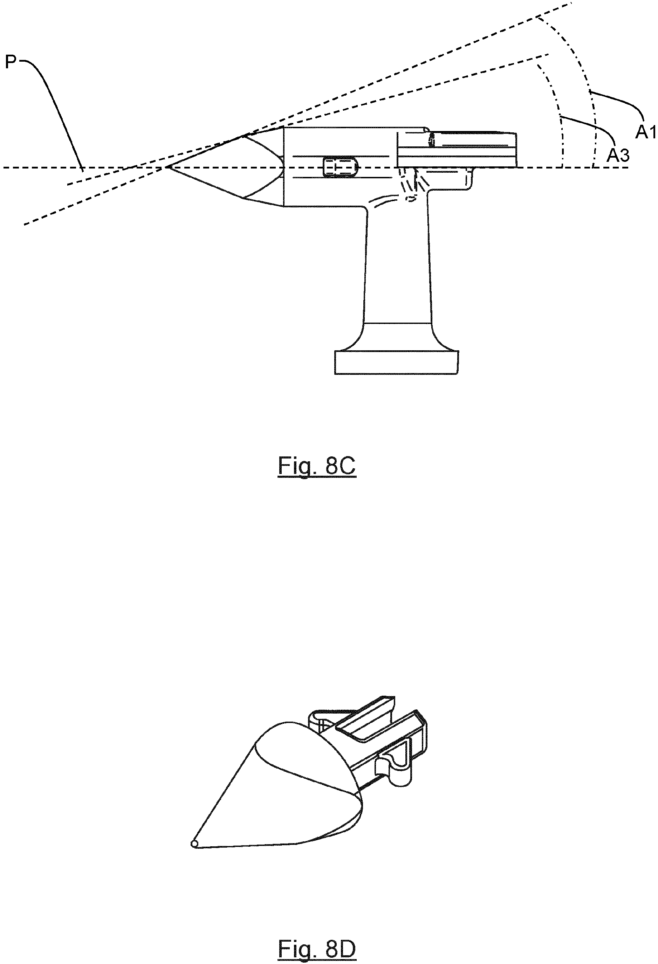

As illustrated in figure 8, the support portion 43 can comprise a third channel 45 such that, when the support portion 43 is placed into the second channel 38, the third channel forms a continuation of the first channel 35.

In other words, the third channel 45 is adapted to be placed in the continuity of the first channel 35 when the support portion 43 is inserted in the second channel 38.

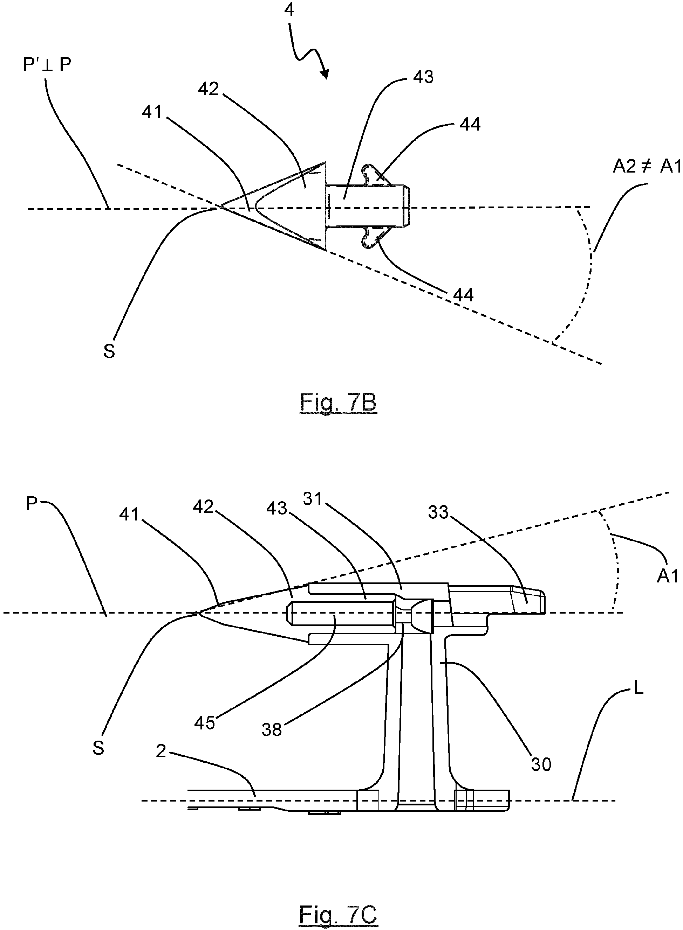

Moreover, as illustrated in Figure 7B and 8B, the head insert 4 can comprise one or more fins 44 formed on an external surface of the support portion 43.

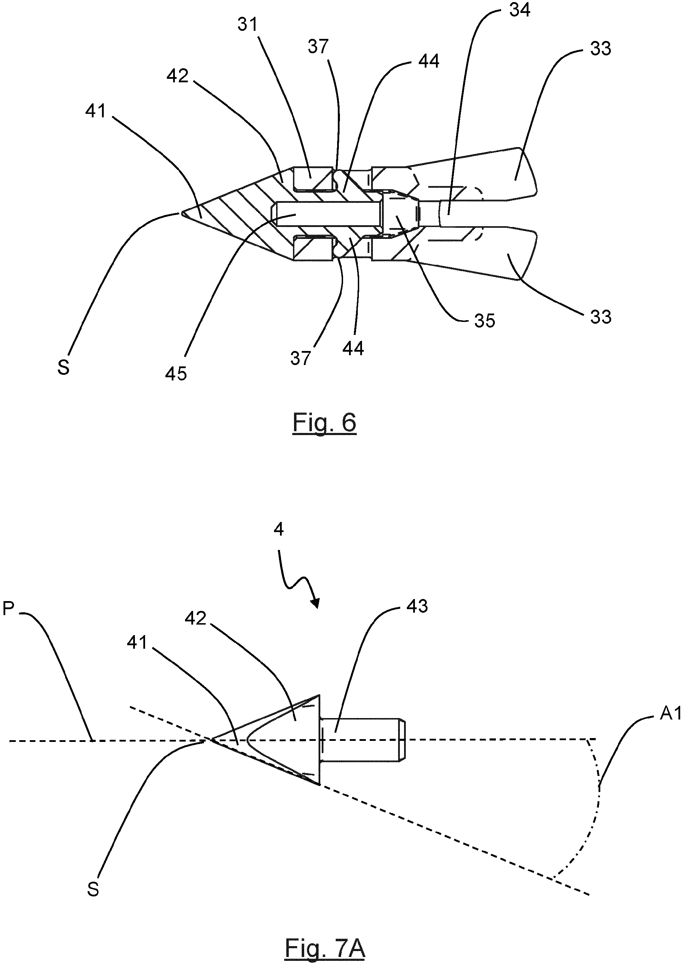

At least one of these fins 44 is configured to be clipped into a corresponding recess 37 formed onto the head body 31, as more particularly represented in figure 6.

In this way, when the head insert 4 is inserted in the second channel 38, the fins 44 lock the head insert 4 into the head body 31.

Of course, other solutions can be proposed to secure the head insert 4 with the head body 31, that do not rely on the use of a support portion 43 cooperating with the second channel 38. For example, the head insert 4 can be fitted onto the head body by welding, adhesive or the like, or force fitted into the head body, or over molded by the head body. The head insert 4 can even be molded integrally with the head body.

According to the disclosure, the head insert 4 also comprises a pin end portion, located at the opposite of the support portion 43.

According to a first embodiment, the pin end portion comprises a first part having an elliptic conical shape. The front end of the first part, used to pierce the animal's skin, comprises an apex. The rear end of the first part has an elliptic section.

According to a second embodiment, the pin end comprises a first part having a conical shape. The front end of the first part, used to pierce the animal's skin, comprises an apex. The rear end of the first part has a disk section. The pin end also comprises a second part having a truncated elliptic conical shape. The front end of the second part, which correspond to the rear end of the first part, has a disk section. The rear end of the second part has an elliptic section.

The pin end portion presents a generally elliptic conical shape, symmetrical with respects to a plane P passing through the apex S of the elliptic conical shape. Such plane P can be parallel to the longitudinal plane L.

In other words, the pin end portion presents one upper part and one lower part which are identical, and are arranged symmetrically according to the plane P passing by the summit of the pin end, also called the tip of the pin end, which corresponds to the apex of the conical shape.

The direction of the head body can be given by the axis passing through the first channel 35 and the apex (which are preferably aligned), located in the plane P. In other words, the direction of the head body is given by two points, one located at the rear of the head body, for example between the two wings 33 that form an anchor "V", and the other one at the apex of the head insert 4.

In this disclosure, and as more visible in figures 6 to 8, the pin end portion of the head insert 4 comprises a first part 41 comprising the apex S. In some embodiments, the pin end portion also comprises a second part 42 located between the first part 41 and the support portion 43.

In other words, the first part 41 is at the front end of the head insert 4, the second part 42 is in continuity of the first part 41, and the support portion 43 is in continuity of the second part 42, at the back end of the head insert 4.

In the first embodiment illustrated in figures 7A to 7C, where the pin end portion comprises a first part having an elliptic conical shape, the first part 41 has a first surface inclination angle A1 from apex S relative to the plane of symmetry P (i.e. defined by the apex of the pin end portion and the major axis of an elliptic section of the pin end portion).

Moreover, this first part 41 has a second surface inclination angle A2 from apex S relative to a plan P' orthogonal to the plan of symmetry P (i.e. defined by the apex S of the pin end portion and the minor axis of an elliptic section of the pin end portion).

As the shape is elliptic, first surface inclination angle A1 and second surface inclination angle A2 are different.

More particularly, in this embodiment, the second surface inclination angle A2 is greater than the first surface inclination angle A1.

In this embodiment, the first surface inclination angle A1 is for example comprised between 7 and 17 degrees, for instance approximately equal to 11.5 degrees. This corresponds to an angle comprised between 18 and 28 degrees, for example approximately 23 degrees, for the whole first part, taken from a side view of the head insert.

In other embodiments, the first surface inclination angle could be comprised between 15 and 30 degrees.

Moreover, in this embodiment, the second surface inclination angle A2 is for example comprised between 17 and 27 degrees, for instance approximately equal to 22.5 degrees. This corresponds to an angle comprised between 40 and 50 degrees, for example approximately 45 degrees taken from a top view of the head insert.

In other embodiments, the second surface inclination angle could be comprised between 30 and 60 degrees.

In the second embodiment illustrated in figures 8A to 8C, where the pin end portion comprises a first part having a conical shape, and a second part having a truncated elliptic conical shape, the first part 41 has a first surface inclination angle A1 from apex S relative to the plane of symmetry P (i.e. defined by the apex of the pin end portion and the major axis of an elliptic section of the pin end portion) and a second surface inclination angle A2 from apex S relative to a plan P' orthogonal to the plan of symmetry P (i.e. defined by the apex S of the pin end portion and the minor axis of an elliptic section of the pin end portion), which are identical.

The second part (42) has the same second surface inclination angle from apex (S) relative to the plane (P') orthogonal to the plane of symmetry (P), and a third surface inclination angle (A3) from a point located at a junction between the first part (41) and the second part (42) relative to the plane of symmetry (P), said second surface inclination angle (A2) being different from said third surface inclination angle (A3).

More particularly, in this embodiment, the first surface inclination angle A1 is greater than the third surface inclination angle A3.

In this embodiment, the first surface inclination angle A1 and the second surface inclination angle A2 are for example comprised between 17 and 27 degrees, for instance approximately equal to 22.5 degrees. This corresponds to an angle comprised between 40 and 50 degrees, for example approximately 45 degrees taken from a top view or a side view of the head insert.

In other embodiments, the first and second surface inclination angles could be comprised between 30 and 60 degrees.

Moreover, in this embodiment, the third surface inclination angle A3 is for example comprised between 7 and 17 degrees, for instance approximately equal to 11.5 degrees. This corresponds to an angle comprised between 18 and 28 degrees, for example approximately 23 degrees, for the whole first part, taken from a side view of the head insert.

In other embodiments, the third surface inclination angle could be comprised between 15 and 30 degrees.

Concerning the shape of the head insert, and depending on the embodiments, it is to be noticed that the first part and/or the second part if present can present a surface with rounded edges. In variants, first part or the second part can present a surface without rounded edges.

In this embodiment, and as illustrated more particularly in figure 3, both first part 41 and second part 42 present a surface with rounded edges.

The head insert 4 illustrated in this embodiment presents a width approximately equal to 8.5mm, a length approximately equal to 18mm, and height approximately equal to 5.7mm.

As illustrated, the maximum height is reached on the second part 42 of this head insert 4. So is the maximum width.

In other embodiments, the head insert can present a width comprised for example between 5 and 10 mm. Moreover, the maximum width can be reached at the second part or at the support portion.

Furthermore in other embodiments not illustrated, the head insert can present a length (including the support portion 43) comprised between 10 and 25 mm.

Furthermore in other embodiments not illustrated, the head insert can present a height comprised between 3 and 10 mm. Moreover, the maximum height can be reached at the second part or at the support portion.

Concerning the support portion 43, it presents for example a length comprised between 5 and 15, preferably approximately equal to 8mm.

A tag of the disclosure may be made in a material adapted to resist the conditions and circumstances under which it is applied to an animal and subsequently worn by the animal. For example, it has to be resistant to a variety of different weather conditions if the animal is outside, and it must be able to withstand mechanical stress such as breaks and tears during both application and while the animal wears the tag. Moreover, it has to be healthy for the animal, including not a material that the animal might have an allergic reaction to. And the tag material must not be too heavy.

In this way, the main body of the tag can be made in any one of materials comprising: Thermoplastic PolyUrethane (TPU), High Density Polyethylene (HDPE), nylon6, Low Density Polyethylene (LDPE), Ethylene Propylene Diene Monomer (EPDM), rubber, or some combination thereof.

Furthermore, the head insert of the disclosure has to be made in material adapted to resists to the conditions in which it is applied and worn (as described above) and also has to be able to pierce the animal's skin without breaking deforming.

In this way, the head insert can be made in any one of materials comprising: Polyoxymethylene (POM), Nylon 6, Nylon 66, acrylonitrile butadiene styrene (ABS), Zamac, brass, inox, High Density Polyethylene (HDPE), or some combination thereof.

The head body can be made in any one of materials comprising: Thermoplastic PolyUrethane (TPU), High Density Polyethylene (HDPE), nylon6, Low Density Polyethylene (LDPE), Ethylene Propylene Diene Monomer (EPDM), rubber, or some combination thereof.

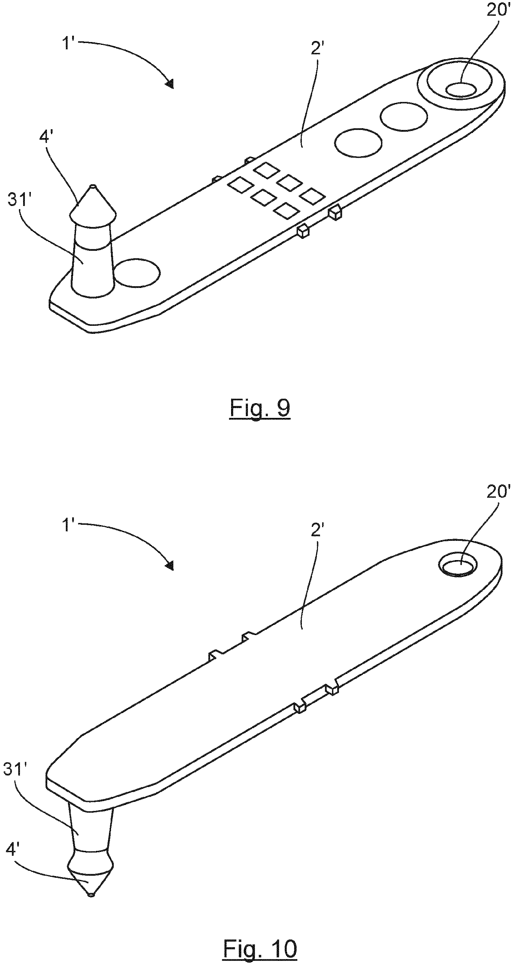

We now describe another embodiment of the disclosure with the help of figures 9 and 10. As illustrated in those two figures, the one-piece tag 1' comprises:
- a head body 31', comprising a first straight channel starting from a back end of said head body and adapted to receive an applicator pin (not illustrated in those figures), and
- a head insert 4', located at a front end of the head body 31'.

In this embodiment also, and according to the invention, the head insert 4' comprises a pin end portion presenting an elliptic conical shape, adapted to pierce a portion of an animal's body.

As illustrated, the one-piece tag 1' of this embodiment comprises a main body 2' taking the form of a plastic strip provided with a hole 20' at the back end, corresponding to the end opposite to the end supporting the head body 31'.

With this kind of main body 2', when applicating the tag 1' onto an animal's ear, the main body 2' is fold and the head insert 4' together with the head body 31' cross the hole 20' and are locked in this position, the tag forming a loop.

The head body 31' is quite similar to the head body 31. It is adapted to receive an applicator pin at its rear end, and to cooperate with a head insert at its front end. The head body 31' is thus not described in more details.

The head insert 4' is also quite similar to the head insert 4. It is adapted to cooperate with the head body 31' at its rear side, and to pierce a portion of an animal's body at its front end. The head insert 4' comprises a pin end portion presenting a general elliptic conical shape such as described here-above. It is thus not described in more details.

## Claims

1. A one-piece tag (1, 1') for identifying an animal comprising:
- a head body (31), comprising a first straight channel (35) starting from a back end of said head body (31) and adapted to receive an applicator pin (9), and
- a head insert (4), located at a front end of said head body (31),
said head insert (4) comprising a pin end portion presenting an elliptic conical shape, adapted to pierce a portion of an animal's body.

2. The tag (1) according to claim 1, wherein the apex of the pin end portion and the first straight channel (35) are located on a same axis.

3. The tag (1) according to any one of claims 1 or 2, wherein the pin end portion comprises a first part (41), comprising an apex (S) at its front end and an elliptic section at its rear end.

4. The tag (1) according to claim 3, wherein the first part (41) comprises:
- a first surface inclination angle (A1) from apex (S) relative to a plane of symmetry (P) defined by the apex (S) of the pin end portion and the major axis of an elliptic section of the pin end portion, and
- a second surface inclination angle (A2) from apex (S) relative to a plane (P') orthogonal to the plane of symmetry (P), said first surface inclination angle (A1) being different from said second surface inclination angle (A2).

5. The tag (1) according to any one of claims 1 or 2, wherein the pin end portion comprises a first part (41), comprising an apex (S) at its front end and a disk section at its rear end, and a second part (42) comprising the disk section at its front end and an elliptic section at its rear end.

6. The tag (1) according claim 5, wherein the first part comprises:
- a first surface inclination angle (A1) from apex (S) relative to a plane of symmetry (P) defined by the apex (S) of the pin end portion and the major axis of an elliptic section of the pin end portion, and
- a second surface inclination angle (A2) from apex (S) relative to a plane (P') orthogonal to the plane of symmetry (P), said first surface inclination angle (A1) being identical to said second surface inclination angle (A2), and
said second part (42) comprises:
- the second surface inclination angle from apex (S) relative to the plane (P') orthogonal to the plane of symmetry (P),
- a third surface inclination angle (A3) from a point located at a junction between the first part (41) and the second part (42) relative to the plane of symmetry (P), said second surface inclination angle (A2) being different from said third surface inclination angle (A3).

7. The tag (1) according to any of claims 3 to 6, wherein said first part (41) and/or said second part (42) according to claims 5 or 6 presents a surface with rounded edges.

8. The tag (1) according to any one of claims 1 to 7, wherein the head body comprises a second channel (38), starting from the front end of said head body (31), and wherein said head insert (4) comprises a support portion (43) inserted into said second channel (38).

9. The tag (1) according to claim 8, wherein said head insert (4) comprising at least one fin (44) formed on an external surface of said support portion (43), clipped into a corresponding recess (37) formed onto said head body (31).

10. The tag (1) according to any of claims 1 to 9, wherein said head insert (4) comprises a third channel (45) in the continuity of said first channel (35).

11. The tag (1) according to any of claims 1 to 10, wherein said head insert (4) is made in one of material comprising: Polyoxymethylene, Nylon 6, Nylon 66, Acrylonitrile Butadiene Styrene, zamac, brass, inox, High Density Polyethylene.

12. The tag (1) according to any of claims 1 to 11, wherein the head body is made in one of material comprising: Thermoplastic PolyUrethane, High Density Polyethylene, nylon6, Low Density PolyEthylene, Ethylene Propylene Diene Monomer, rubber.

13. The tag (1) according to any of claims 1 to 12, wherein said insert (4) presents:
- a length comprised between 10 and 25 mm, preferably approximately equal to 18mm, and/or
- a height comprised between 3 and 10 mm, preferably approximately equal to 5.7mm, and/or
- a width comprised between 5 and 10 mm, preferably approximately equal to 8.5mm

14. The tag (1) according to any of claims 13, wherein said support portion (43) presents a length comprised between 5 and 15 mm, preferably approximately equal to 8mm.

15. The tag (1) according to any of claims 1 to 14, wherein it comprises a main body (2) extending in a longitudinal plan (L) and a head support (30) connecting the head body (31) to the main body (2), and wherein the head body (31) extends in a direction (D) parallel to said longitudinal plan (L).
